# EUROPEAN PATENT APPLICATION

(11) **EP 4 716 279 A1**
(43) Date of publication of application: **25.03.2026**
(21) Application number: 24830593.0
(22) Date of filing: 19.06.2024
(51) Int. Cl.: H04W 24/02

(54) **AUTONOMOUS FUNCTION MANAGEMENT METHOD AND APPARATUS**

(30) Priority: 29.06.2023 CN 202310792939
(71) Applicant: Huawei Technologies Co., Ltd., Shenzhen, Guangdong 518129 (CN)
(72) Inventor: XU, Ruiyue, Shenzhen, Guangdong 518129 (CN)
(74) Representative: Gill Jennings & Every LLP
(86) International application number: PCT/CN2024/100153
(87) International publication number: WO 2025/001947

(57) **Abstract**

Embodiments of this application provide an autonomous function management method and an apparatus, allowing operators to manage an autonomous function. The method may be implemented by a first device. The first device is, for example, a vendor device. The method includes: receiving a first request from a second device, where the first request is used for requesting to manage a first intent, the first request carries first indication information, and the first indication information indicates to report information about an autonomous function for serving the first intent; obtaining information about at least one autonomous function for serving the first intent; and sending the information about the at least one autonomous function to the second device.

## Description

### CROSS-REFERENCE TO RELATED APPLICATIONS

This application claims priority to Chinese Patent Application No. 202310792939.5, filed with the China National Intellectual Property Administration on June 29, 2023 and entitled "AUTONOMOUS FUNCTION MANAGEMENT METHOD AND APPARATUS", which is incorporated herein by reference in its entirety.

### TECHNICAL FIELD

This application relates to the field of information technologies, and in particular, to an autonomous function management method and an apparatus.

### BACKGROUND

With introduction of vertical industries, the growth in terminal devices, and diversification of services, operators' networks become increasingly complex, leading to greater difficulties in network operation and maintenance. How to reduce network operation and maintenance costs, simplify network operation and maintenance processes, and enable rapid network deployment to meet diverse service requirements are issues to be resolved in the field of the network operation and maintenance.

Application of automation technologies (like artificial intelligence, machine learning, big data analytics, digital twins, and the like) in mobile communication networks are increasingly becoming a major focus and research hotspot in the industry. There is growing expectation in the industry that automation technologies can help improve operation and maintenance efficiency of the mobile communication networks. The automation technologies can be applied to various scenarios across a network life cycle, including network planning, network deployment, network optimization, service operation, and the like. The use of the automation technologies can reduce manual operations, lower operators' operating expense (operating expense, OPEX), and improve operation and maintenance efficiency.

An intent-driven interface, which is the core of the automation technology, focuses on describing user expectations including requirements, goals, and constraints, but without specifying specific automation solutions or technologies to be used, where telecommunication systems select an optimal automation solution or technology to fulfill user expectations. For example, operators may send an intent to the telecommunication systems through the intent-driven interface, and the telecommunication systems may orchestrate and configure, based on the intent, various autonomous functions deployed by the operators, to implement the intent, and feed back, to the operators, an intent result about whether the intent has been fulfilled. In this way, operators can perceive whether the intent has been fulfilled, but cannot manage the autonomous functions. For example, operators cannot determine a specific autonomous function that serves specific intents, whether deployed autonomous functions are used by a specific intent, or when new autonomous functions need to be deployed.

### SUMMARY

Embodiments of this application provide an autonomous function management method and an apparatus, so that an operator can understand and manage an autonomous function for serving one or more intents.

According to a first aspect, an autonomous function management method is provided. The method may be implemented by a first device or a chip in the first device. The first device is, for example, a vendor device. The method includes: receiving a first request from a second device, where the first request is used for requesting to manage a first intent, the first request carries first indication information, and the first indication information indicates to report information about an autonomous function for serving the first intent; obtaining information about at least one autonomous function for serving the first intent; and sending the information about the at least one autonomous function to the second device.

In this embodiment of this application, the second device may indicate the first device to report the information about the at least one autonomous function for serving the first intent, so that the second device can determine, based on the information about the at least one autonomous function, a specific autonomous function that serves the first intent, and determine whether to deploy a new autonomous function or disable some autonomous functions, to manage the autonomous function that the second device requests the first device to deploy, and improve rationality of deploying the autonomous function.

In a possible implementation, the method further includes: sending second indication information to the second device, where the second indication information indicates whether the first intent served by the at least one autonomous function is fulfilled. If the first intent is not fulfilled, the first device may generate autonomous function suggestion information, where the autonomous function suggestion information indicates the second device to upgrade a first autonomous function in the at least one autonomous function and/or add a second autonomous function to the at least one autonomous function; and send the autonomous function suggestion information to the second device.

In the foregoing technical solution, when determining that the intent of the second device is not fulfilled, the first device may determine an autonomous function needed to fulfill the first intent, and generate the autonomous function suggestion information, so that the second device may manage the autonomous function based on the autonomous function suggestion information, to improve efficiency of managing the autonomous function by the second device, and improve rationality of deploying the autonomous function by the second device.

In a possible implementation, when the autonomous function suggestion information indicates the second device to upgrade the first autonomous function in the at least one autonomous function, the autonomous function suggestion information may further include an identifier and to-be-upgraded version information of the first autonomous function; or when the autonomous function suggestion information indicates the second device to add the second autonomous function to the at least one autonomous function, the autonomous function suggestion information may further include a type and version information of the second autonomous function.

In the foregoing technical solution, the second device may quickly determine a deployment solution of the autonomous function based on the autonomous function suggestion information fed back by the first device, to improve efficiency of managing the autonomous function.

In a possible implementation, the method further includes: sending parameter adjustment information to the second device, where the parameter adjustment information indicates a network parameter type adjusted by the first device when the first autonomous function serves the first intent, and the network parameter type includes one or more of the following: a radio frequency parameter, indicating a signal transmit angle and power; a handover parameter, indicating a handover threshold for cell reselection or cell handover; an energy saving parameter, indicating an energy saving state of a base station or a cell; a radio resource management parameter, indicating radio resource scheduling or management; or a quality of service parameter, indicating service quality.

In a possible implementation, the method further includes: receiving a second request from the second device, where the second request is used for requesting to obtain intent information of at least one intent served by a third autonomous function, and the third autonomous function is any one of a plurality of autonomous functions that the second device requests the first device to deploy; obtaining the intent information of the at least one intent served by the third autonomous function, where the intent information includes an intent identifier of a second intent currently served by the third autonomous function, and/or an intent identifier of a third intent historically served by the third autonomous function; and sending the intent information to the second device.

In the foregoing technical solution, the second device may further request the first device to feed back intent information of one or more intents currently or historically served by a specific autonomous function, so that the second device may determine an intent that each autonomous function may serve, to improve rationality of deploying the autonomous function.

In a possible implementation, the intent information may further include: an intent type and/or an intent state of the second intent, and/or service duration and/or an intent type of the third intent.

According to a second aspect, an autonomous function management method is provided. The method may be implemented by a second device or a processing chip in the second device. The second device is, for example, a device of an operator. The method includes: sending a first request to a first device, where the first request is used for requesting to manage a first intent, the first request carries first indication information, and the first indication information indicates to report information about an autonomous function for serving the first intent; receiving information about at least one autonomous function from the first device, where the at least one autonomous function is an autonomous function for serving the first intent; and managing, based on the information about the at least one autonomous function, an autonomous function corresponding to the second device, where the autonomous function corresponding to the second device is an autonomous function that the second device requests the first device to deploy.

In a possible implementation, managing, based on the information about the at least one autonomous function, the autonomous function corresponding to the second device includes: determining, based on the information about the at least one autonomous function, an unused autonomous function from the autonomous function corresponding to the second device; and sending third indication information to the first device, where the third indication information indicates the first device to disable the unused autonomous function.

In the foregoing technical solution, the second device may determine, based on the information that is sent by the first device and that is about the at least one autonomous function for serving the first intent, whether there is the unused autonomous function in the autonomous function corresponding to the second device. If there is the unused autonomous function, the second device may disable the unused autonomous function, to reduce deployment costs of the autonomous function.

In a possible implementation, the method further includes: receiving second indication information from the first device, where the second indication information indicates whether the first intent served by the at least one autonomous function is fulfilled; and managing, based on the information about the at least one autonomous function, the autonomous function corresponding to the second device includes: managing, based on the second indication information and the information about the at least one autonomous function, the autonomous function corresponding to the second device.

Correspondingly, when the second indication information indicates that the first intent served by the at least one autonomous function is not satisfied, the method further includes: receiving autonomous function suggestion information from the first device, where the autonomous function suggestion information indicates to upgrade a first autonomous function in the at least one autonomous function and/or add a second autonomous function to the at least one autonomous function; and managing, based on the information about the at least one autonomous function, the autonomous function corresponding to the second device includes: managing, based on the autonomous function suggestion information and the information about the at least one autonomous function, the autonomous function corresponding to the second device, so that the first intent may be fulfilled.

In a possible implementation, when the autonomous function suggestion information indicates to upgrade the first autonomous function in the at least one autonomous function, the autonomous function suggestion information includes an identifier and to-be-upgraded version information of the first autonomous function; or when the autonomous function suggestion information indicates to add the second autonomous function to the at least one autonomous function, the autonomous function suggestion information includes a type and version information of the second autonomous function.

In a possible implementation, the method further includes: receiving parameter adjustment information from the first device, where the parameter adjustment information indicates a network parameter type adjusted by the first device when the first autonomous function serves the first intent, and the network parameter type includes one or more of the following: a radio frequency parameter, indicating a signal transmit angle and power; a handover parameter, indicating a handover threshold for cell reselection or cell handover; an energy saving parameter, indicating an energy saving state of a base station or a cell; a radio resource management parameter, indicating radio resource scheduling or management; or a quality of service parameter, indicating service quality.

In a possible implementation, the method further includes: sending a second request to the first device, where the second request is used for requesting to obtain intent information of at least one intent served by a third autonomous function, and the third autonomous function is any one of a plurality of autonomous functions that the second device requests the first device to deploy; receiving the intent information from the first device, where the intent information includes an intent identifier of a second intent currently served by the third autonomous function, and/or an intent identifier of a third intent historically served by the third autonomous function; and managing the third autonomous function based on the intent information. For example, the intent information may further include: an intent type and/or an intent state of the second intent, and/or service duration and/or an intent type of the third intent.

In the first aspect and any one of the possible implementations of the first aspect, or in the second aspect and any one of the possible implementations of the second aspect, the information about the autonomous function includes at least one of the following: an identifier of each of the at least one autonomous function, a type of each of the at least one autonomous function, and version information of each of the at least one autonomous function.

In a possible implementation, the type of the autonomous function includes one or more of the following: a management data analytic management function; an energy saving management function; a coverage and capacity optimization management function; an automatic neighbor relations management function; a mobility load balancing management function; a mobility robustness optimization management function; a physical cell identifier allocation and optimization management function; a random access channel optimization management function; a traffic steering management function; or a closed-loop automatic management function.

According to a third aspect, a communication apparatus is provided, including a communication module and a processing module. The communication apparatus may be the foregoing first device, or may be the foregoing second device. The communication apparatus may perform either the first aspect or the second aspect and any one of the implementations of either the first aspect or the second aspect. The communication module is configured to perform functions related to sending and receiving. Optionally, the communication module may include a communication interface or an interface circuit. In a design, the communication apparatus may be a communication chip, the processing module may be one or more processors or processor cores, and the communication module may be an input/output circuit or a port of a communication chip.

Optionally, the communication apparatus may further include another module that may be configured to perform either the first aspect or the second aspect and any one of the implementations of either the first aspect or the second aspect.

According to a fourth aspect, a communication apparatus is provided, including a processor and a memory. The communication apparatus may be the foregoing first device, or may be the foregoing second device. Optionally, the communication apparatus may further include a communication interface. The memory stores a computer program or instructions. When the processor is configured to invoke and run the computer program or the instructions from the memory, the communication apparatus is caused to perform either the first aspect or the second aspect and any one of the implementations of either the first aspect or the second aspect.

Optionally, there may be one or more processors, and one or more memories. The memory may be integrated with the processor, or the memory and the processor are arranged separately.

Optionally, the communication interface may include an interface circuit.

According to a fifth aspect, a communication apparatus is provided, including a processor. The communication apparatus may be the foregoing first device, or may be the foregoing second device. The processor is coupled to the memory, and is configured to execute computer program instructions stored in the memory, to perform either the first aspect or the second aspect and any one of the implementations of either the first aspect or the second aspect. Optionally, the communication apparatus may further include a memory and/or a communication interface, and the processor is coupled to the memory and/or the communication interface.

In an implementation, when the communication apparatus is a first device or a second device, the communication interface may be a transceiver or an input/output interface. Optionally, the transceiver may be a transceiver circuit. Optionally, the input/output interface may be an input/output circuit.

In another possible implementation, when the communication apparatus is a chip or a chip system of a first device or a chip or a chip system of a second device, the communication interface may be an input/output interface, an interface circuit, an output circuit, an input circuit, a pin, a related circuit, or the like of the chip or the chip system. The processor may alternatively be embodied as a processing circuit or a logic circuit.

According to a sixth aspect, a system is provided, including the foregoing first device and the foregoing second device.

According to a seventh aspect, a computer program product is provided. The computer program product includes a computer program (or may be referred to as code or instructions). When the computer program is run, a computer is caused to perform either the first aspect or the second aspect and any one of the implementations of either the first aspect or the second aspect.

According to an eighth aspect, a computer-readable storage medium is provided. The computer-readable medium stores a computer program (or may be referred to as code or instructions). When the computer program is run on a computer, the computer is caused to perform either the first aspect or the second aspect and any one of the implementations of either the first aspect or the second aspect.

According to a ninth aspect, a chip system is provided. The chip system may include a processor. The processor is coupled to a memory, and may be configured to invoke computer program instructions stored in the memory, to perform either the first aspect or the second aspect and any one of the implementations of either the first aspect or the second aspect. Optionally, the chip system may further include a memory. The memory stores a computer program (or may be referred to as code or instructions). The processor is configured to invoke the computer program from the memory and run the computer program, to enable an apparatus in which the chip system is installed to perform either the first aspect or the second aspect and any one of the implementations of either the first aspect or the second aspect.

According to a tenth aspect, a processing apparatus is provided, including an interface circuit and a processing circuit. The interface circuit may include an input circuit and an output circuit. The processing circuit is configured to: receive a signal via the input circuit, and transmit a signal via the output circuit, so that either the first aspect or the second aspect and any one of the implementations of either the first aspect or the second aspect are implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In another implementation, the apparatus may be some components in a first device or a second device, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

For technical effects that can be achieved in any one of the second aspect to the tenth aspect, refer to descriptions of technical effects that can be achieved in any one of the possible implementations of the first aspect or the second aspect. Details are not described herein again in this application.

### BRIEF DESCRIPTION OF DRAWINGS

FIG. 1a is a diagram of a system architecture according to an embodiment of this application;
FIG. 1b is a diagram of another system architecture according to an embodiment of this application;
FIG. 1c is a diagram of still another system architecture according to an embodiment of this application;
FIG. 2 is a schematic flowchart of an autonomous function management method according to an embodiment of this application;
FIG. 3 is a diagram of a structure of an apparatus according to an embodiment of this application; and
FIG. 4 is a diagram of a structure of another apparatus according to an embodiment of this application.

### DESCRIPTION OF EMBODIMENTS

The following describes technical solutions in embodiments of this application with reference to accompanying drawings in embodiments of this application. Embodiments of this application may be applied to various mobile communication systems, for example, a new radio (new radio, NR) system, a long term evolution (long term evolution, LTE) system, a long term evolution advanced (advanced long term evolution, LTE-A) system, a future communication system, and another communication system. This is not limited herein. For ease of understanding, the following explains and describes some terms in embodiments of this application.
(1) An intent (intent): It describes expectations for telecommunication systems (including telecommunication networks and their operation management systems), including requirements, goals, constraints, and the like. The telecommunication systems determine which solution to use to fulfill the intent.

The intent may carry parameters, and values of the parameter may be understood as target values of an intent. The telecommunication system may select, based on different target values, different policies from a set of available execution policies determined based on the intent. For example, an intent includes an intent object and an intent target. The intent object is information about a to-be-managed object provided based on intent requirements. The information includes an object name (intent-driven object name, IDO Name) and a series of properties (IDO Properties) used for identifying the object. The intent target is a goal that needs to be achieved, and the intent target may be represented by a target value. For example, the intent is to optimize a downlink rate of a cell, where the intent object is a "cell", and the intent target is the downlink rate and a specific value of the downlink rate. For example, the intent may include a capacity intent (for example, the capacity intent requires that a high-load ratio in an area 1 be less than 10%), a coverage intent (for example, the coverage intent requires that a weak coverage ratio in the area 1 be less than 20%), a rate intent (for example, the rate intent requires that a proportion of low-rate users in the area 1 be less than 5%), and the like.

(2) Management function (management function, MnF): an entity that provides specific networks or service management capabilities.

(3) Managed object (managed object): It describes information about a managed object or a management task in a management system (for example, a telecommunication network operation and management system). Creating a managed object means creating management information in the management system, to enable the management system to manage the managed object or execute a management task based on the management information.

(4) Autonomous network (autonomous network, AN): a network in a telecommunication system that implements self-management and control through autonomous capabilities with minimal manual intervention.

(5) Operation and maintenance process: It is a necessary step for implementing network management requirements, and a complete closed loop from receiving management requirements to implementing the requirements. The operation and maintenance process includes a plurality of operation and maintenance tasks (tasks). For example, it includes network planning, network construction, network maintenance, network optimization, network operation, and the like.

(6) Network autonomy capability: It refers to the ability to achieve self-management and control. It reflects a degree of autonomy of a network technology employed. A higher degree of network autonomy indicates a higher network autonomy capability.

(7) Autonomous function: It is used to provide services for operators and fulfill operators' intents.

(8) Instance of an autonomous function: It is a device configured to deploy the autonomous function, which may be a server, a virtual machine, a server node, or the like.

(9) Terms "system" and "network" may be used interchangeably in embodiments of this application. The term "at least one type (piece)" means one type (piece) or more types (pieces), and "a plurality of types (pieces)" means two types (pieces) or more types (pieces). The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof indicates any combination of these items, including any combination of a single item (piece) or a plurality of items (pieces). For example, at least one item (piece) of a, b, or c may indicate: a, b, c, a and b, a and c, b and c, or a, b, and c, where a, b, and c may be singular or plural.

Unless otherwise specified, ordinal numbers such as "first" and "second" mentioned in embodiments of this application are used to distinguish a plurality of objects, and are not used to limit a sequence, a time sequence, priorities, or importance of the plurality of objects.

In addition, the terms "include" and "have" in embodiments of this application, the claims, and the accompanying drawings are not exclusive. For example, a process, a method, a system, a product, or a device that includes a series of steps or modules is not limited to the listed steps or modules, and may further include steps or modules that are not listed.

Currently, operators cannot manage an autonomous function for fulfilling an intent. Therefore, to enable operators to manage an autonomous function, embodiments of this application provide a technical solution for managing an autonomous function. In embodiments of this application, when sending a request for managing an intent to a vendor, the operator may indicate the vendor to feed back information about an autonomous function serving the intent to the operator after running the autonomous function corresponding to the intent, so that the operator can perceive a usage status of the deployed autonomous function, to manage the deployed autonomous function. For example, a new autonomous function may be deployed or some autonomous functions may be disabled, to help increase a probability that the intent is fulfilled.

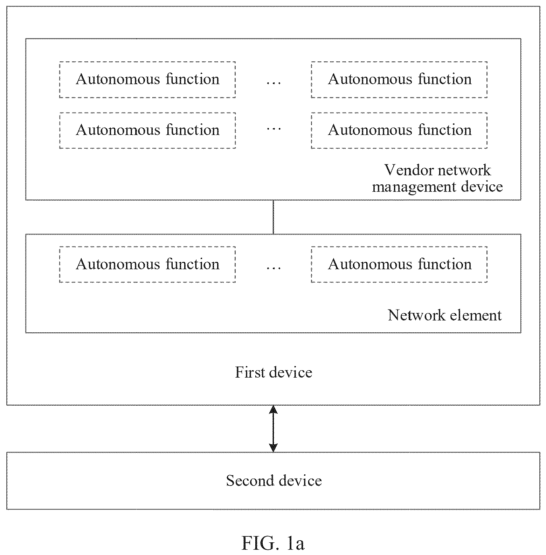

FIG. 1a is a diagram of a system architecture according to an embodiment of this application. The system architecture includes a first device (for example, a vendor device) and a second device (for example, an operator device). The first device includes a vendor network management device and a network element, and the vendor network management device and the network element include a plurality of autonomous functions. The second device may send a request for deploying an autonomous function to the first device, to request the first device to deploy the autonomous function, to implement an intent of the second device. For example, when receiving an intent request from the second device, the first device may orchestrate and configure autonomous functions (including autonomous functions in the vendor network management device and the network element) that the second device requests to deploy, to fulfill the intent of the second device. In addition, the first device may further feed back, to the second device, information about the autonomous function for serving the intent, for example, an identifier and/or a type of the autonomous function, so that the second device may manage, based on the information about the autonomous function, the autonomous function that the second device requests the first device to deploy, for example, deploy a new autonomous function, disable some autonomous functions, or upgrade some autonomous functions.

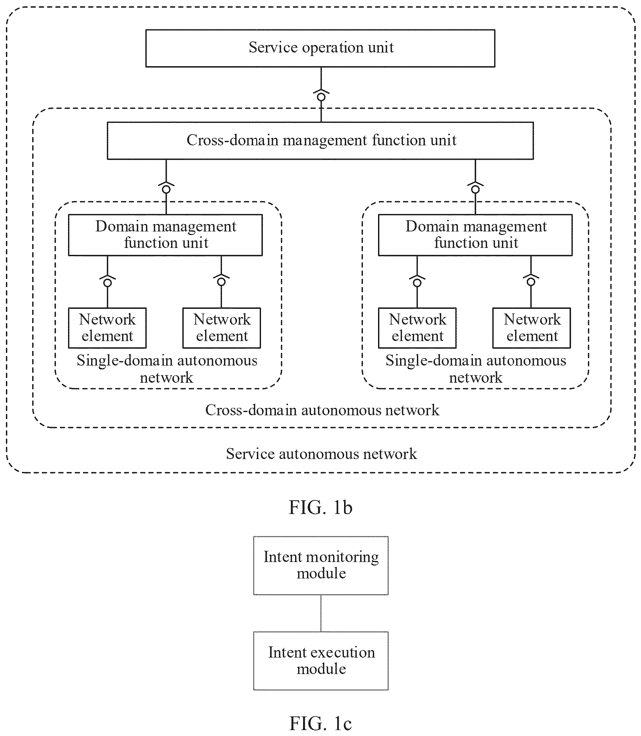

FIG. 1b is a diagram of another system architecture according to an embodiment of this application. The system architecture may alternatively be referred to as a network management system, a management architecture, a network architecture, or the like. The system architecture includes: a service operation unit, a cross-domain management function (cross-domain management function, CD-MnF) unit, a domain management function (domain management function, D-MnF) unit, and a plurality of network elements (net elements, NEs).

One service operation unit may manage one or more cross-domain management function units. One cross-domain management function unit may manage one or more domain management function units. One domain management function unit may manage one or more network elements. The following briefly describes each unit.

### (1) Service operation unit

The service operation unit may alternatively be referred to as a business support system (business support system, BSS) or a communication service management function (communication service management function, CSMF) unit. The service operation unit may be configured to provide functions and management services such as charging, settlement, accounting, customer service, business, network monitoring, communication service life cycle management, service intent interpretation, and the like. The service operation unit may include an operating system of an operator or a vertical operational technology system (vertical operational technology system). The operator in embodiments of this application may be understood as a person who performs some operations on the second device, or may be referred to as an operation and maintenance engineer of the operator.

### (2) cross-domain management function unit

The cross-domain management function unit may alternatively be referred to as a network management function (network management function, NMF) unit. The cross-domain management function unit may provide one or more of the following functions or management services: network life cycle management, network deployment, network fault management, network performance management, network configuration management, network guarantee, a network optimization function, interpretation of a network intent from a communication service provider (intent from communication service provider, intent-CSP), interpretation of a network intent from a communication service consumer (intent from communication service consumer, intent-CSC), and the like. The network herein may include one or more network elements, subnetworks, or network slices. For example, the cross-domain management function unit may be a network slice management function (network slice management function, NSMF), a management data analytic function (management data analytic function, MDAF), a cross-domain self-organization network function (self-organization network function, SON-function), or a cross-domain intent management function unit.

In some deployment scenarios, the cross-domain management function unit may alternatively provide one or more of the following management functions or management services: subnetwork life cycle management, subnetwork deployment, subnetwork fault management, subnetwork performance management, subnetwork configuration management, subnetwork guarantee, a subnetwork optimization function, a subnetwork intent interpretation function, and the like. The subnetwork may include a plurality of small subnetworks or a plurality of network slice subnetworks. For example, a subnetwork of an access network of an operator includes a subnetwork of an access network of a vendor 1 and a subnetwork of an access network of a vendor 2. The vendor mentioned in embodiments of this application may be understood as a person who performs some operations on the first device, and may be responsible for maintaining running of the first device.

### (3) Domain management function unit

The domain management function unit may alternatively be referred to as a domain MnF, a subnetwork management function (subnetwork management function, SMF) or a network element management function (network element/function management function) unit. The domain management function unit provides one or more of the following functions or management services: subnetwork or network element life cycle management, subnetwork or network element deployment, subnetwork or network element fault management, subnetwork or network element performance management, subnetwork or network element guarantee, subnetwork or network element optimization management, subnetwork or network element intent interpretation, and the like. The subnetwork herein includes one or more network elements. Alternatively, the subnetwork herein may include one or more subnetworks, that is, the one or more subnetworks form a subnetwork with a larger coverage area. Alternatively, the subnetwork herein may include one or more network slice subnetworks. The subnetwork may be described in at least one of the following manners:
a network in a technical field, for example, a radio access network, a core network, a transmission network, or the like;
a network of a specific standard, for example, a global system for mobile communications (global system for mobile communications, GSM) network, a long term evolution (long term evolution, LTE) network, a 5th generation mobile communication technology (5th generation mobile communication technology, 5G for short) network;
a network provided by a vendor, for example, a network provided by a vendor X; or
a network in a geographical area, for example, a network of a factory A or a network of a city B.

### (4) Network element

The network element is an entity that provides a network service, and includes a core network element, a radio access network element, a transmission network element, or the like. For example, the core network element may include but is not limited to an access and mobility management function (access and mobility management function, AMF) entity, a session management function (session management function, SMF) entity, a policy control function (policy control function, PCF) entity, a network data analytics function (network data analytics function, NWDAF) entity, a network repository function (network repository function, NRF), a gateway, and the like.

The radio access network element may include but is not limited to various types of base stations, for example, a next generation NodeB (generation NodeB, gNB), an evolved NodeB (evolved NodeB, eNB), a central unit control plane (central unit control plane, CUCP), a central unit (central unit, CU), a distributed unit (distributed unit, DU), and a central unit user plane (central unit user plane, CUUP), and the like. In this application, a network function NF is alternatively referred to as a network element NE.

In addition, in a service-oriented management architecture, there are a plurality of deployments for a management service producer (management service producer, MnS producer) and management service consumer (management service consumer, MnS consumer). For example, when the management service is a management service provided by the service operation unit, the service operation unit is a management service producer, and another service operation unit (for example, a cross-domain management function unit, a domain management function unit, or a network element) may be a management service consumer. When the management service is a management service provided by the cross-domain management function unit, the cross-domain management function unit is a management service producer, and another service operation unit (for example, a service operation unit, a domain management function unit, or a network element) is a management service consumer. When the management service is a management service provided by the domain management function unit, the domain management function unit is a management service producer, and another service operation unit (for example, a cross-domain management function unit, a service operation unit, or a network element) is a management service consumer. When the management service is a management service provided by the network element, the network element is a management service producer, and another service operation unit (for example, a domain management function unit, a cross-domain management function unit, or a service operation unit) is a management service consumer.

In this embodiment of this application, autonomous function management may be performed on autonomous networks in different scopes shown in FIG. 1b. The autonomous network scopes may include the following three cases:
a single-domain autonomous network includes a network element and a domain management function unit;
a cross-domain autonomous network includes a network element, a domain management function unit, and a cross-domain management function unit; or
a service autonomous network includes a network element, a domain management function unit, a cross-domain management function unit, and a service operation unit.

FIG. 1c is a diagram of an architecture in a vendor device and an operator device according to an embodiment of this application, including an intent monitoring module and an intent execution module. FIG. 1a is used as an example. The intent execution module may be deployed in the first device shown in FIG. 1a, and the intent monitoring module may be deployed in the second device. A location at which the intent monitoring module is connected to the intent execution module may be referred to as an interface (not shown in the figure). The intent monitoring module may send a request to the intent execution module through the interface. Correspondingly, the intent execution module may receive the request from the intent monitoring module through the interface, for example, receive a first request for requesting to manage a first intent. The intent execution module may run a corresponding autonomous function based on the first request and send information of the used autonomous function to the intent monitoring module through the interface, so that the intent monitoring module may manage the autonomous function based on the information about the autonomous function.

In another embodiment, FIG. 1b is used as an example. For different autonomous networks, the intent monitoring module and the intent execution module may be deployed in the following several scenarios.

Scenario 1: For a single-domain autonomous network, the intent execution module may be deployed in a domain management function unit or a network element, and the intent monitoring module may be deployed in a cross-domain management function unit.

Scenario 2: For a cross-domain autonomous network, the intent execution module may be deployed in a cross-domain management function unit, and the intent monitoring module may be deployed in a service operation unit.

Scenario 3: For a service autonomous network, the intent execution module may be deployed in a service operation unit, and the intent monitoring module may be deployed in a third-party system (for example, an enterprise system) outside the autonomous network.

In a service-oriented management architecture, the intent monitoring module is a management service consumer, and the intent execution module is a management service producer. A logic interface is a management and control interface for an intent-based autonomous management function.

The following describes in detail the method provided in embodiments of this application with reference to the foregoing descriptions of FIG. 1a to FIG. 1c.

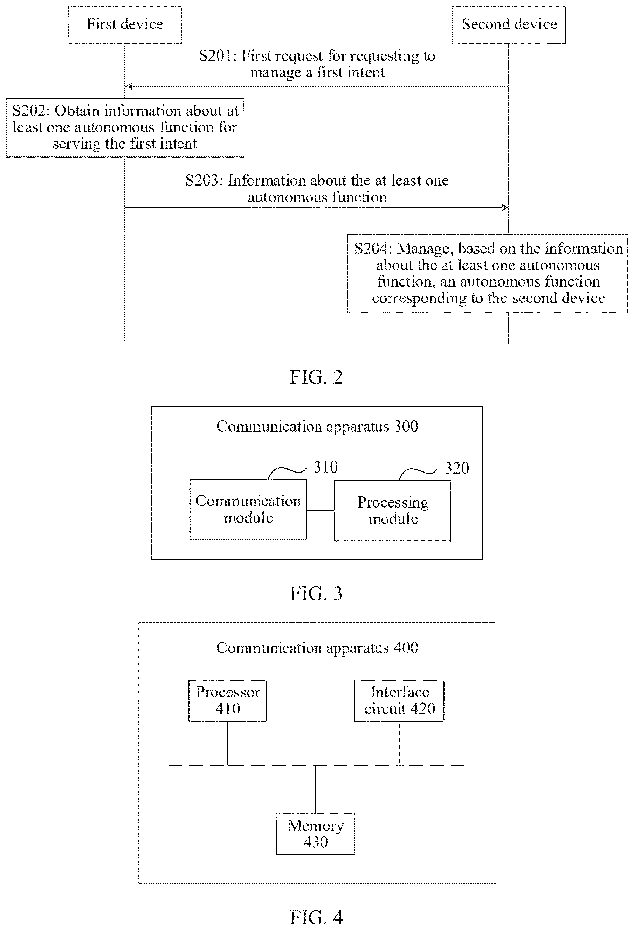

FIG. 2 is a schematic flowchart of an autonomous function management method according to an embodiment of this application. The method may be implemented by the first device and the second device in FIG. 1a, or may be implemented by the intent monitoring module and the intent execution module shown in FIG. 1c. In the following embodiment, an example in which the method is implemented by the first device and the second device in FIG. 1a is used. The first device may be a vendor device, and the second device may be an operator device. The operator device may be understood as a server, a service device, or the like that provides a service for an operator, and the vendor device may be a core network device, an access network device, or the like. An implementation process includes the following steps.

S201: The second device sends a first request to the first device, to request to manage a first intent. Correspondingly, the first device receives the first request from the second device.

The first request may carry first indication information, indicating the first device to report, after managing the first intent (for example, creating the first intent), information about an autonomous function for serving the first intent, that is, report information about an autonomous function by the first device when implementing the first intent. Optionally, the information about the autonomous function may include at least one of the following: an identifier of the autonomous function, a type of the autonomous function, and version information of the autonomous function. Optionally, the type of the autonomous function may include one or more of the following.

A management data analytic management function (management data analytic MnF, MDA MnF) is used for analyzing management data by using intelligent/automation technologies to derive a management data analytic result, for example, detecting a network problem, analyzing a root cause of a network problem, and the like.

An energy saving management function (energy saving MnF, ES MnF) is used for reducing network energy consumption by using intelligent/automation technologies, to improve network energy efficiency.

A coverage and capacity optimization management function (coverage and capacity optimization MnF, CCO MnF) is used for optimizing network coverage and capacity performance by using intelligent/automation technologies.

An automatic neighbor relations management function (automatic neighbor relations MnF, ANR MnF) is used for automatically configuring neighbor relations by using intelligent/automation technologies.

A mobility load balancing management function (mobility load balancing MnF, MLB MnF) is used for automatically performing load balancing between a plurality of cells or a plurality of network elements by using intelligent/automation technologies.

A mobility robustness optimization management function (mobility robustness optimization MnF, MRO MnF) is used for automatically performing mobility robustness optimization by using intelligent/automation technologies.

A physical cell identifier optimization management function (physical cell identifier optimization MnF, PCIO MnF) is used for automatically allocating or adjusting a physical cell identifier to a cell by using intelligent/automation technologies.

A random access channel optimization management function (random access channel optimization MnF, RACHO MnF) is used for automatically optimizing the random access channel by using intelligent/automation technologies.

A traffic steering management function (traffic steering MnF, TS MnF) is used for optimizing a service traffic forwarding path by using intelligent/automation technologies.

A closed-loop automatic management function is used for performing a network optimization process, report perception, analysis, decision-making, and execution by using intelligent/automation technologies.

Optionally, the first request may further carry a management type identifier, an intent identifier of the first intent, intent object information of the first intent, and/or intent target information of the first intent. The management type identifier may indicate a management type, for example, indicate a creation intent, a modification intent, or the like. The intent identifier indicates a specific intent. The intent object (which may alternatively be referred to as an expectation object below) information indicates information of an object that the intent expects to manage. The intent target (which may alternatively be referred to as an expectation target below) information indicates information of a target that the intent expects to implement.

For example, the first intent is an intent in a single-domain autonomous network. The first intent may include a wireless network rate optimization intent, a wireless network coverage optimization intent, a wireless network capacity optimization intent, a wireless network energy saving intent, and the like. The following describes in detail several concepts such as the wireless network rate optimization intent, the wireless network coverage optimization intent, the wireless network capacity optimization intent, and the wireless network energy saving intent.

The wireless network rate optimization intent is an operator's intent for optimizing a rate of a wireless network. The intent object information of the wireless network rate optimization intent may include, for example, area information, frequency information, network standard information, and the like. The intent target information may include, for example, an average uplink rate target (for example, an ave uplink radio access network user equipment thpt target), an average downlink rate target, and a low-rate user proportion target (for example, a low uplink radio access network user equipment thpt target).

The wireless network coverage optimization intent is an operator's intent for optimizing wireless network coverage. The intent object information of the wireless network coverage optimization intent may include, for example, area information, frequency information, network standard information, and the like. The intent target information may include, for example, a weak coverage ratio target (a weak reference signal received power ratio target, or a low signal to interference plus noise ratio ratio target), and the like.

The wireless network capacity optimization intent is an operator's intent for optimizing wireless network capacity. The intent object information of the wireless network capacity optimization intent may include, for example, area information, frequency information, network standard information, and the like. The intent target information may include, for example, a high-load ratio target (for example, a high uplink physical resource block load ratio target, or a high downlink physical resource block load ratio target), and the like.

The wireless network energy saving intent is an operator's intent for wireless network energy saving. The intent object information of the wireless network energy saving intent may include, for example, area information, frequency information, network standard information, and the like. The intent target information may include, for example, an energy efficiency target (for example, a radio access network energy efficiency target) and an energy consumption target (for example, a radio access network energy consumption target), and the like.

Managing the first intent may include, for example, creating the first intent, modifying the first intent, testing the first intent, or performing feasibility evaluation on the first intent. For example, if the operator needs to create a new first intent, the operator may send the first request to the first device by using the second device, to request the first device to create the new first intent. For example, the operator may send a created first intent to the first device by using the second device, where the first intent is that a proportion of low-rate users in an area 1 is less than 5%.

If the operator needs to modify the first intent, the second device may send the first request to the first device, to request the first device to modify the first intent. For example, the first intent before modification is that the proportion of the low-rate users in the area 1 is less than 5%. The operator may send, to the first device by using the second device, a request for modifying the first intent, for example, request the first device to modify the first intent to that the proportion of the low-rate users in the area 1 is less than 3%.

If the operator needs to test the first intent, the second device may send the first request to the first device, to request the first device to test the first intent. For example, the first intent is that the proportion of the low-rate users in the area 1 is less than 5%. The operator may send, to the first device by using the second device, a request for testing the first intent, for example, request the first device to test whether the proportion of the low-rate users in the area 1 is less than 5%. If the first device determines that the proportion of the low-rate users in the area 1 is less than 5%, it indicates that the first intent is fulfilled. If the first device determines that the proportion of the low-rate users in the area 1 is greater than or equal to 5%, it indicates that the first intent is not fulfilled.

If the operator needs to perform feasibility evaluation on the first intent, the second device may send the first request to the first device, to request the first device to perform feasibility evaluation on the first intent. For example, the first intent is that the proportion of the low-rate users in the area 1 is less than 5%. The operator may send, to the first device by using the second device, a request for performing feasibility evaluation on the first intent, for example, request the first device to evaluate whether the first intent can be implemented. If the first device determines that a lowest proportion of the low-rate users in the area 1 is 3%, it indicates that the first intent can be implemented (that is, the first intent is feasible). If the first device determines that a lowest proportion of the low-rate users in the area 1 is 6%, it indicates that the first intent cannot be implemented (that is, the first intent is not feasible). In the following embodiment, an example in which the first request is used for requesting to create the first intent is used for description.

Optionally, before sending the first request to the first device, the second device may further request the first device to deploy the autonomous function. For example, the second device may send, to the first device, a request for deploying the autonomous function, where the request for deploying the autonomous function may include a type of the autonomous function that needs to be deployed. The first device may orchestrate and configure the autonomous function that the second device requests to deploy, to implement an intent of the second device. Optionally, when the second device requests the first device to deploy the autonomous function, for different autonomous functions, the second device may request to deploy a plurality of instances that are responsible for functions of different areas. Therefore, the request for deploying the autonomous function may further carry a quantity of instances corresponding to each autonomous function. For example, the second device may request the first device to deploy three MDA MnF instances, where one MDA MnF instance is responsible for coverage and capacity performance analysis in an area 1, one MDA MnF instance is responsible for rate performance analysis in the area 1, and one MDA MnF instance is responsible for coverage and capacity performance analysis in an area 2. A function of an area for which each instance is responsible may be indicated by the second device when the second device requests the first device to deploy the autonomous function, or may be configured by the first device.

In actual application, the operator may have a plurality of intent requirements. Therefore, the autonomous function corresponding to the first intent may include some or all types of autonomous functions that the second device requests the first device to deploy. For example, the first intent is a wireless network rate optimization intent, and the types of autonomous functions that the second device requests the first device to deploy include an MDA MnF, a CCO MnF, an ANR MnF, an MLB MnF, and a PCIO MnF. The types of autonomous functions that are determined by the first device and used for serving the wireless network rate optimization intent may include only some types of autonomous functions, for example, include only the MDA MnF and the CCO MnF.

S202: The first device obtains information about at least one autonomous function for serving the first intent.

Before obtaining the information about the at least one autonomous function for serving the first intent, the first device may first manage the first intent based on the first request, for example, create the first intent, modify the first intent, test the first intent, or perform feasibility evaluation on the first intent.

The following describes a process in which the first device manages the first intent by using an example in which the first request is used for requesting to create the first intent.

The first device may parse information of the first intent carried in the first request, to obtain the intent object information and/or the intent target information of the first intent. The first device may determine, based on the obtained intent object information and/or the intent target information, the at least one autonomous function for serving the first intent from the autonomous functions that the second device requests to deploy.

For example, the first device may obtain instance information of the autonomous function corresponding to the second device, determine an available instance based on the instance information, and determine the at least one autonomous function based on the available instance. Optionally, the first device may further determine, from instances that can be used by the at least one autonomous function, an instance used for serving the first intent. In the following embodiments, the instance used for serving the first intent is referred to as a target autonomous function instance for short.

For example, the first intent is a wireless network rate optimization intent. The first device determines, based on the intent object information, the intent target information, and the autonomous function that the second device requests the first device to deploy, that at least one autonomous function for serving the wireless network rate optimization intent includes a CCO MnF and an MLB MnF. The first device may further determine, based on the intent target information (for example, a target value corresponding to an intent target), a quantity of the CCO MnF instances and a quantity of the MLB MnF instances that are used for serving the first intent. For example, the first device determines, based on the target value, that two CCO MnF instances and three MLB MnF instances are required. The first device may select two CCO MnF instances from available CCO MnF instances, for example, a CCO MnF instance 1 and a CCO MnF instance 2, and the first device may select three MLB MnF instances from available MLB MnF instances, for example, an MLB MnF instance 1, an MLB MnF instance 2, and an MLB MnF instance 3. The CCO MnF instance 1, the CCO MnF instance 2, the MLB MnF instance 1, the MLB MnF instance 2, and the MLB MnF instance 3 are the foregoing target autonomous function instances.

After determining the target autonomous function instance, the first device may further generate configuration information (for example, policy information) of the target autonomous function instance, and configure the target autonomous function instance based on the configuration information. After the target autonomous function instance is configured, the first device may run the target autonomous function instance, to create the first intent. Optionally, during creation of the first intent, the first device may further create an intent managed object, and configure, in the intent managed object, the intent object information, the intent target information, and autonomous function monitor context information that is carried in the first request. For example, the first intent is a wireless network rate optimization intent. The intent managed object of the created first intent is shown in Table 1.

**Table 1**

| Property | Readable or not | Configurable or not |
|---|---|---|
| Intent identifier (IntentId) of managed object | Yes | Yes |
| Expectation object (ExpectationObject) | Yes | Yes |
| Expectation target (ExpectationTarget) | Yes | Yes |
| Autonomous function monitor context (Autonomous Function Monitor Context) | Yes | Yes |

The autonomous function monitor context information is configured by the first device based on the first indication information. When running the target autonomous function instance, the first device may record, based on the autonomous function monitor context, information about at least one autonomous function for serving the first intent. For example, the at least one autonomous function includes an autonomous function 1. Information of the autonomous function 1 may include an identifier of the autonomous function 1, a type of the autonomous function 1, and/or version information of the autonomous function 1 (for example, version information of an instance of the autonomous function 1). The identifier of the autonomous function 1 may be an identifier of the instance of the autonomous function 1 (for example, a CCO instance 1). Optionally, the information about the autonomous function 1 may further include load information of the instance of the autonomous function 1, so that the second device may determine, based on the load information, whether a quantity of instances of the autonomous function 1 needs to be increased or reduced.

Readable or not indicates whether an interface invoker can read a parameter; and configurable or not indicates whether an interface invoker can configure a parameter.

For related information of the expectation object in Table 1, further refer to Table 2.

**Table 2**

| Property | Readable or not | Configurable or not |
|---|---|---|
| Object type (ObjectType) | Yes | Yes |
| Area information (CoverageAreaPolygonContext) | Yes | Yes |
| Frequency band information (nRFqBandContext) | Yes | Yes |
| Standard information (rATContext) | Yes | Yes |

For related information of the expectation target, further refer to Table 3.

**Table 3**

| Property | Readable or not | Configurable or not |
|---|---|---|
| Average uplink rate target | Yes | Yes |
| Average downlink rate target | Yes | Yes |
| Proportion of low-uplink-rate users | Yes | Yes |
| Proportion of low-downlink-rate users | Yes | Yes |

The first device may obtain the information about the at least one autonomous function. For example, the first device may obtain an identifier of each of the at least one autonomous function, a type of each of the at least one autonomous function, and version information of each of the at least one autonomous function.

S203: The first device sends the information about the at least one autonomous function to the second device. Correspondingly, the second device receives the information about the at least one autonomous function from the first device.

Optionally, after managing the first intent (for example, creating the first intent), the first device may further obtain network performance information. The network performance information may include, for example, a network performance measurement parameter (measurement), a network performance key indicator, a network performance quality indicator, a key quality indicator (key quality indicator, KQI), a service level agreement (service level agreement, SLA), and the like. The first device may evaluate execution information of the first intent based on the network performance information. The execution information includes, for example, an execution result, that is, whether the first intent served by the at least one autonomous function can be fulfilled. Therefore, the first device may further send second indication information to the second device, to indicate whether the first intent is fulfilled, so that the second device may manage, based on the second indication information and the information about the at least one autonomous function, the autonomous function corresponding to the second device.

Optionally, if the first device evaluates and determines, based on the obtained network performance information, that the first intent served by the at least one autonomous function is not fulfilled, the first device may further determine a cause why the first intent is not fulfilled, and generate autonomous function suggestion information based on the cause.

For example, the first device may determine whether the target autonomous function instance includes an instance of a low version. If the target autonomous function instance includes an instance of a low version of a first autonomous function, the first device may generate autonomous function suggestion information that indicates the second device to upgrade the first autonomous function. Optionally, the autonomous function suggestion information for upgrading the first autonomous function may further include an identifier (MnFId) of the first autonomous function and to-be-upgraded version information (MnFVersion). For example, the at least one autonomous function includes a CCO MnF and an MLB MnF. The first device determines that a highest version of a CCO MnF instance is 3.0.0, and a version of the CCO MnF instance used for serving the first intent is 1.0.0. Therefore, the first device may generate autonomous function suggestion information for upgrading the CCO MnF to the version 3.0.0.

The first device may further determine, based on execution information of a historical intent or execution information of an intent of another device, an autonomous function needed to fulfill the first intent, and determine whether a specific autonomous function that is not included in the at least one autonomous function exists in the autonomous function needed to fulfill the first intent. If the first device determines, based on the execution information of the historical intent or the execution information of the intent of the another device, that a second autonomous function exists in the autonomous function needed to fulfill the first intent, and the second autonomous function is not included in the at least one autonomous function, the first device may generate autonomous function suggestion information for adding the second autonomous function to the at least one autonomous function. The second autonomous function may be an autonomous function that the second device does not request the first device to deploy. Alternatively, the second autonomous function may be an autonomous function that the second device requests the first device to deploy, but an instance of the second autonomous function that the second device requests the first device to deploy is currently serving another intent, and the instance of the second autonomous function has high load and cannot continue to serve the first intent. Optionally, the autonomous function suggestion information for adding the second autonomous function to the at least one autonomous function may further include a type (MnFType) and version information of the second autonomous function. For example, the second autonomous function is an MLB MnF, and the autonomous function suggestion information generated by the first device may be that the MLB MnF is newly added to the at least one autonomous function, with a version of 2.0.0. Optionally, the autonomous function suggestion information for adding the second autonomous function to the at least one autonomous function may further include service scope information of the second autonomous function, where the scope information indicates an area (for example, an area 1) served by the second autonomous function.

For example, the first device determines, based on execution information of an intent (for example, an intent that is the same as the first intent) of another device, that an autonomous function 1, an autonomous function 2, and an autonomous function 3 are required to fulfill the first intent, but the first device determines that at least one autonomous function for serving the first intent includes only the autonomous function 1 and the autonomous function 2. Therefore, the first device may generate autonomous function suggestion information for adding the autonomous function 3 to the at least one autonomous function.

After generating the autonomous function suggestion information, the first device may further send the autonomous function suggestion information to the first device, so that the second device may manage, based on the autonomous function suggestion information and the information about the at least one autonomous function, the autonomous function corresponding to the second device.

Optionally, during management of the first intent, the first device may further adjust a network parameter. The network parameter includes, for example, a network parameter type, and the network parameter type includes one or more of the following:
a radio frequency (radio frequency, RF) parameter, indicating a signal transmit angle and power, where for example, the parameter may include an azimuth, a tilt angle, and a transmit power of an antenna, and the like;
a handover parameter, indicating a handover threshold for cell reselection or cell handover, where for example, the parameter may include a cell handover threshold, and the like;
an energy saving parameter, indicating an energy saving state of a base station or a cell, where for example, the parameter may include a carrier shutdown parameter, and the like;
a radio resource management (radio resource management, RRM) parameter, indicating radio resource scheduling or management, where for example, the parameter may include a quantity of resource blocks (resource blocks, RBs), and the like; or
a quality of service (quality of service, QoS) parameter, indicating service quality, where for example, the parameter may include a fifth generation mobile communication technology quality of service identifier (5G QoS identifier, 5QI) scheduling parameter, and the like.

After adjusting the network parameter, the first device may further send parameter adjustment information (NetworkAdjustmentTypeInfo) to the second device.

Optionally, the first device may send, to the second device by using the same information, the parameter adjustment information, the autonomous function suggestion information, the second indication information, and the information about the at least one autonomous function; or may separately send, by using different information, the parameter adjustment information, the autonomous function suggestion information, the second indication information, and the information about the at least one autonomous function. For example, the first device may send, by using the same information, the parameter adjustment information, the autonomous function suggestion information, the second indication information, and the information about the at least one autonomous function; or the first device may send the information about the at least one autonomous function by using first information, and send the parameter adjustment information, the autonomous function suggestion information, and the second indication information by using second information. Alternatively, the first device may further send the information about the at least one autonomous function and the second indication information by using first information, send the autonomous function suggestion information by using second information, and send the parameter adjustment information by using third information. A manner in which the first device sends the foregoing information to the second device is not limited in embodiments of this application.

In some embodiments, the first device may further generate a feedback report. The feedback report includes the information sent by the first device to the second device, for example, the foregoing information about the at least one autonomous function, the second indication information, the autonomous function suggestion information, and the parameter adjustment information. A form of the generated feedback report is shown in Table 4.

**Table 4**

| Property | Readable or not | Configurable or not |
|---|---|---|
| Intent report identifier | Yes | Yes |
| Second indication information | Yes | Yes |
| Information of an autonomous function | Yes | Yes |
| Autonomous function suggestion information | Yes | Yes |
| Parameter adjustment information | Yes | Yes |

The intent report identifier is used for identifying an intent report.

S204: The second device manages, based on the information about the at least one autonomous function, an autonomous function corresponding to the second device.

The second device may determine, based on the information about the at least one autonomous function, whether the autonomous function that the second device requests the first device to deploy needs to be managed, that is, determine whether the autonomous function that the second device requests the first device to deploy has a requirement on life cycle management. If there is the requirement on life cycle management, the autonomous function is managed; or if there is no requirement on life cycle management, the autonomous function is not managed. For example, if the second device determines, based on the information about the at least one autonomous function, that an autonomous function is unused, it indicates that the deployment of the autonomous function is redundant, and the second device may disable or delete the autonomous function, indicating there is a requirement on life cycle management. If a specific autonomous function serves a plurality of intents, but an instance corresponding to the autonomous function is not overloaded (that is, instance load of the autonomous function does not reach an upper limit), it indicates that currently there may be no requirement on life cycle management.

Alternatively, the second device may further determine, based on the second indication information received from the first device, whether there is a requirement on life cycle management. For example, if the second indication information indicates that the first intent is fulfilled, the second device determines that there is no requirement on life cycle management; or if the second indication information indicates that the first intent is not fulfilled, the second device determines that there is a requirement on life cycle management.

Alternatively, the second device may further determine, depending on whether the autonomous function suggestion information from the first device is received, whether there is a requirement on life cycle management. For example, if the second device receives the autonomous function suggestion information from the first device, it indicates that the first intent is not fulfilled, that is, there is a requirement on life cycle management; or if the second device does not receive the autonomous function suggestion information from the first device, it indicates that the first intent may be fulfilled, that is, there is no requirement on life cycle management.

The following provides several manners in which the second device performs autonomous function management.

Manner 1: If the second indication information indicates that the first intent is fulfilled, and the second device determines to perform autonomous function management, the second device may determine an unused autonomous function based on the information about the at least one autonomous function, and send third indication information to the first device, to indicate the first device to disable (or delete) the unused autonomous function.

Manner 2: If the second indication information indicates that the first intent is not fulfilled, and the second device receives the autonomous function suggestion information from the first device, the second device may manage the autonomous function based on the autonomous function suggestion information. For example, if the autonomous function suggestion information indicates to upgrade the first autonomous function, the second device may send fourth indication information to the first device, to indicate the first device to upgrade the first autonomous function. The fourth indication information may include to-be-upgraded version information, or may not include the to-be-upgraded version information. If the fourth indication information does not include the to-be-upgraded version information, the first device may upgrade the first autonomous function based on the autonomous function suggestion information sent by the second device to the first device.

Manner 3: If the second indication information indicates that the first intent is not fulfilled, and the second device does not receive the autonomous function suggestion information from the first device, the second device may send fifth indication information to the first device, to indicate the first device to report the autonomous function suggestion information. After receiving the autonomous function suggestion information from the first device, the second device sends the fourth indication information to the first device. For related descriptions of the fourth indication information, refer to related descriptions of the fourth information in Manner 2. Details are not described herein again.

Manner 4: If the second indication information indicates that the first intent is not fulfilled, and the second device does not receive the autonomous function suggestion information from the first device, the second device may further send a second request to the first device, to request to obtain intent information of at least one intent served by a third autonomous function. After receiving the second request from the second device, the first device may obtain the intent information of the at least one intent served by the third autonomous function, and send the obtained intent information to the second device. The intent information may include an intent identifier of a second intent currently served by the third autonomous function, and/or an intent identifier of a third intent historically served by the third autonomous function. Optionally, if the intent information includes the intent identifier of the second intent, the intent information may further include an intent type and/or an intent state of the second intent, where the intent state indicates whether an autonomous function that serves the second intent is running. If the intent information includes the intent identifier of the third intent, the intent information may further include service duration and/or an intent type of the third intent. For example, a form of the intent information may be shown in Table 5.

**Table 5**

| Property | Readable or not | Configurable or not |
|---|---|---|
| Autonomous function identifier | Yes | Yes |
| Identifier of second intent | Yes | Yes |
| Identifier of third intent | Yes | Yes |

In some embodiments, the second device may further send the second request to the first device when determining that a current condition meets a first condition. For example, the first condition may include one or more of the following:
the second device determines that a usage status of the third autonomous function needs to be monitored and evaluated;
when determining that the third autonomous function needs to be disabled or deleted, the second device needs to determine whether the third autonomous function is serving a specific intent; or
when determining that the third autonomous function needs to be upgraded, the second device needs to determine whether the third autonomous function is serving a specific intent.

The following describes two embodiments. This embodiment shows two examples of the autonomous function management method described in the embodiment shown in FIG. 2. In the two embodiments, for example, the second device is an operator device, the first device is a vendor device, and autonomous functions that the operator device requests the vendor device to deploy include an ES MnF, a CCO MnF, an MLB MnF, and a TS MnF. ES MnF instances that the operator device requests the vendor device to deploy include a server 1, a server 2, and a server 3; CCO MnF instances include a server 4, a server 5, a server 6, a server 7, and a server 8; MLB MnF instances include a server 9, a server 10, and a server 11; and TS MnF instances include a server 12 and a server 13.

### Example 1: The first request is used for requesting to create the first intent.

The first intent is, for example, that a proportion of low-rate users in an area 1 is less than 5%. When receiving the first request from the operator device, the vendor device may obtain instance information (for example, load information of the instances) of the ES MnF, the CCO MnF, the MLB MnF, and the TS MnF, and determine available instances of an autonomous function based on the load information. For example, the available instances of the autonomous function include a server 1, a server 2, a server 4, a server 5, a server 6, a server 7, a server 8, a server 9, a server 10, and a server 11. The vendor device determines, based on the available instances of the autonomous function, that two CCO MnF instances and three MLB MnF instances may be required when the proportion of the low-rate users is less than 5%. Therefore, the vendor device may select two CCO MnF instances from the available instances of the autonomous function, for example, the server 4 and the server 5; and select three MLB MnF instances from the available instances of the autonomous function, for example, the server 9, the server 10, and the server 11; and the selected servers are running.

The vendor device may send information about at least one autonomous function (that is, information of the CCO MnF and the MLB MnF) to the operator device based on the first indication information carried in the first request. The information about the CCO MnF and the MLB MnF may include, for example, identifiers of the CCO MnF instance and the MLB MnF instance, that is, identifiers (for example, server identifiers (identity document, ID)) of the server 4, the server 5, the server 9, the server 10, and the server 11. The operator device may manage, based on the received information about the at least one autonomous function from the vendor device, the autonomous function that the operator device requests the vendor device to deploy. For example, the operator device determines, based on the received server identifier, that all MLB MnF instances are used for serving the first intent. Therefore, the operator device may indicate the vendor device to increase a quantity of MLB MnF instances.

In addition, the vendor device may further obtain network performance information, and determine, based on the network performance information, whether the first intent is fulfilled. For example, if the vendor device determines, based on the network performance information, that the proportion of the low-rate users in the area 1 is 6%>5%, it is determined that the first intent is not fulfilled; or if the vendor device determines, based on the network performance information, that the proportion of the low-rate users in the area 1 is 2%<5%, it is determined that the first intent is fulfilled.

If the vendor device determines that the first intent is not fulfilled, the vendor device may further analyze a cause why the first intent is not fulfilled, generate autonomous function suggestion information based on the reason, and send the autonomous function suggestion information to the operator device. For example, if the vendor device determines that a current latest version of the CCO MnF instance is 3.0.0, and versions of the server 4 and the server 5 are 1.0.0, the vendor device may generate autonomous function suggestion information for indicating the operator device to upgrade the CCO MnF. If the vendor device determines that autonomous functions needed to implement the first intent include the MDA MnF, the CCO MnF, and the MLB MnF, and at least one autonomous function currently used for serving the first intent includes only the CCO MnF and the MLB MnF, that is, the MDA MnF is missing, the vendor device may generate autonomous function suggestion information for indicating the operator device to add the MDA MnF to the at least one autonomous function.

After receiving the autonomous function suggestion information from the vendor device, the operator device may send feedback information to the vendor device based on the autonomous function suggestion information, to indicate the vendor device to upgrade or deploy a new autonomous function. For example, if the autonomous function suggestion information indicates to upgrade the CCO MnF, the vendor device may upgrade the versions of the server 4 and the server 5 to 3.0.0 when receiving feedback information for the autonomous function suggestion information from the operator device. If the autonomous function suggestion information indicates to add the MDA MnF to the at least one autonomous function of the operator device, the vendor device may add the MDA MnF to the at least one autonomous function when receiving feedback information for the autonomous function suggestion information from the operator device.

After performing a corresponding operation based on the feedback information for the autonomous function suggestion information from the operator device, the vendor device may rerun an instance of each of the at least one autonomous function. For example, the autonomous function suggestion information indicates to add the MDA MnF to the at least one autonomous function (for example, add an MDA MnF instance, where the added MDA MnF instance is, for example, the server 14 and the server 15), and the vendor device may run the server 4, the server 5, the server 9, the server 10, the server 11, the server 14, and the server 15.

After re-running the instance of each of the at least one autonomous function, the vendor device may re-obtain network performance information, and determine, based on the network performance information, whether the first intent is fulfilled. If the first intent is not fulfilled, the vendor device may re-generate new autonomous function suggestion information until the first intent is fulfilled.

### Example 2: The first request is used for requesting to modify the first intent.

For example, the first intent before the modification is that a proportion of low-rate users in an area 1 is less than 5%, and the first request is used for requesting to modify the first intent to that the proportion of the low-rate users in the area 1 is less than 3%. When receiving the first request from the operator device, the vendor device may determine at least one autonomous function for serving the modified first intent. For a manner of determining the at least one autonomous function, refer to the manner of determining the at least one autonomous function in Example 1. Details are not described herein again.

An example in Example 1 is used as an example. The at least one autonomous function for serving the first intent before modification includes a CCO MnF and an MLB MnF, and instances used for serving the first intent before modification include two CCO MnF instances (the server 4 and the server 5, respectively) and three MLB MnF instances (the server 9, the server 10, and the server 11, respectively). The at least one autonomous function for serving the modified first intent that is determined by the vendor device includes the CCO MnF and the MLB MnF, and three CCO MnF instances and three MLB MnF instances may be required for determining that the proportion of the low-rate users is less than 3%. That is, compared with the first intent before modification, one CCO MnF instance needs to be added to serve the modified first intent. Therefore, the vendor device may select one server from the server 6, the server 7, and the server 8, for example, select the server 6, and run the server 6, to serve the modified first intent by using the server 4, the server 5, the server 6, the server 9, the server 10, and the server 11.

The vendor device may send the information about the at least one autonomous function to the operator device based on the first indication information carried in the first request. The information about the at least one autonomous function is, for example, an identifier of an instance of each of the at least one autonomous function, that is, identifiers of the server 4, the server 5, the server 6, the server 9, the server 10, and the server 11.

In this embodiment of this application, the second device may indicate the first device to feed back, to the second device, information about an autonomous function for serving an intent, so that the second device may manage, based on the information about the autonomous function, the autonomous function that the second device requests the first device to deploy, to improve rationality of deploying the autonomous function. In addition, when determining that the intent is not fulfilled, the first device may further feed back autonomous function suggestion information to the second device, so that the second device can quickly determine a solution that fulfills the intent, to improve efficiency of fulfilling the intent. In addition, the second device may further perform, based on the information about the autonomous function that is fed back by the first device, life cycle management on the autonomous function that the second device requests the first device to deploy, to reduce a probability that the intent is not fulfilled.

To implement the functions in the foregoing embodiments, the first device and the second device include a corresponding hardware structure and/or software module for performing each function. A person skilled in the art should be easily aware that, in this application, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 3 and FIG. 4 are diagrams of structures of possible communication apparatuses according to embodiments of this application. The communication apparatuses may be configured to implement functions of the first device or the second device in the foregoing method embodiments, and therefore can also implement beneficial effects of the foregoing method embodiments. In embodiments of this application, the communication apparatus may be the first device or the second device shown in FIG. 1a, or may be a module (for example, a chip) used in the first device or the second device, or may be the intent monitoring module or the intent execution module shown in FIG. 1c.

The communication apparatus 300 shown in FIG. 3 includes a communication module 310 and a processing module 320. The communication apparatus 300 is configured to implement functions of the first device or the second device in the foregoing method embodiments.

When the communication apparatus 300 is configured to implement functions of the first device in the method embodiment shown in FIG. 2, the communication module 310 is configured to receive a first request from a second device, where the first request is used for requesting to manage a first intent, the first request carries first indication information, and the first indication information indicates to report information about an autonomous function for serving the first intent; the communication module 310 is configured to obtain information about at least one autonomous function for serving the first intent; and the communication module 310 is further configured to send the information about the at least one autonomous function to the second device.

In a possible implementation, the communication module 310 is further configured to send second indication information to the second device, where the second indication information indicates whether the first intent served by the at least one autonomous function is fulfilled.

In a possible implementation, the processing module 320 is further configured to: when determining that the first intent is not fulfilled, generate autonomous function suggestion information, where the autonomous function suggestion information indicates the second device to upgrade a first autonomous function in the at least one autonomous function and/or add a second autonomous function to the at least one autonomous function; and the communication module 310 is further configured to send the autonomous function suggestion information to the second device.

In a possible implementation, when the autonomous function suggestion information indicates the second device to upgrade the first autonomous function in the at least one autonomous function, the autonomous function suggestion information further includes an identifier and to-be-upgraded version information of the first autonomous function; or when the autonomous function suggestion information indicates the second device to add the second autonomous function to the at least one autonomous function, the autonomous function suggestion information further includes a type and version information of the second autonomous function.

In a possible implementation, the communication module 310 is further configured to send parameter adjustment information to the second device, where the parameter adjustment information indicates a network parameter type adjusted by the first device when the first autonomous function serves the first intent, and the network parameter type includes one or more of the following: a radio frequency parameter, indicating a signal transmit angle and power; a handover parameter, indicating a handover threshold for cell reselection or cell handover; an energy saving parameter, indicating an energy saving state of a base station or a cell; a radio resource management parameter, indicating radio resource scheduling or management; or a quality of service parameter, indicating service quality.

In a possible implementation, the information about the at least one autonomous function includes at least one of the following: an identifier of each of the at least one autonomous function, a type of each of the at least one autonomous function, and version information of each of the at least one autonomous function.

In a possible implementation, the type of the autonomous function includes one or more of the following: a management data analytic management function; an energy saving management function; a coverage and capacity optimization management function; an automatic neighbor relations management function; a mobility load balancing management function; a mobility robustness optimization management function; a physical cell identifier allocation and optimization management function; a random access channel optimization management function; a traffic steering management function; or a closed-loop automatic management function.

In a possible implementation, the communication module 310 is further configured to: receive a second request from the second device, where the second request is used for requesting to obtain intent information of at least one intent served by a third autonomous function, and the third autonomous function is any one of a plurality of autonomous functions that the second device requests the first device to deploy; obtain the intent information of the at least one intent served by the third autonomous function, where the intent information includes an intent identifier of a second intent currently served by the third autonomous function, and/or an intent identifier of a third intent historically served by the third autonomous function; and send the intent information to the second device.

In a possible implementation, the intent information further includes: an intent type and/or an intent state of the second intent, and/or service duration and/or an intent type of the third intent.

When the communication apparatus 300 is configured to implement functions of the second device in the method embodiment shown in FIG. 2, the communication module 310 is configured to: send a first request to a first device, where the first request is used for requesting to manage a first intent, the first request carries first indication information, and the first indication information indicates the first device to report information about an autonomous function for serving the first intent; and receive information about at least one autonomous function from the first device, where the at least one autonomous function is an autonomous function for serving the first intent. The processing module 320 is configured to manage, based on the information about the at least one autonomous function, an autonomous function corresponding to the second device, where the autonomous function corresponding to the second device is an autonomous function that the second device requests the first device to deploy.

In a possible implementation, the processing module 320 is configured to manage the autonomous function in the following manner: determine, based on the information about the at least one autonomous function, an unused autonomous function from the autonomous function corresponding to the second device; and the communication module 310 is configured to send third indication information to the first device, where the third indication information indicates the first device to disable the unused autonomous function.

In a possible implementation, the communication module 310 is further configured to receive second indication information from the first device, where the second indication information indicates whether the first intent served by the at least one autonomous function is fulfilled; and the processing module 320 is configured to manage the autonomous function corresponding to the second device in the following manner: manage, based on the second indication information and the information about the at least one autonomous function, the autonomous function corresponding to the second device.

In a possible implementation, the communication module 310 is further configured to receive autonomous function suggestion information from the first device, where the autonomous function suggestion information indicates to upgrade a first autonomous function in the at least one autonomous function and/or add a second autonomous function to the at least one autonomous function; and the processing module 320 is further configured to manage the autonomous function corresponding to the second device in the following manner: managing, based on the autonomous function suggestion information and the information about the at least one autonomous function, the autonomous function corresponding to the second device.

In a possible implementation, when the autonomous function suggestion information indicates to upgrade the first autonomous function in the at least one autonomous function, the autonomous function suggestion information includes an identifier and to-be-upgraded version information of the first autonomous function; or when the autonomous function suggestion information indicates to add the second autonomous function to the at least one autonomous function, the autonomous function suggestion information includes a type and version information of the second autonomous function.

In a possible implementation, the communication module 310 is further configured to receive parameter adjustment information from the first device, where the parameter adjustment information indicates a network parameter type adjusted by the first device when the first autonomous function serves the first intent, and the network parameter type includes one or more of the following: a radio frequency parameter, indicating a signal transmit angle and power; a handover parameter, indicating a handover threshold for cell reselection or cell handover; an energy saving parameter, indicating an energy saving state of a base station or a cell; a radio resource management parameter, indicating radio resource scheduling or management; or a quality of service parameter, indicating service quality.

In a possible implementation, the information about the autonomous function includes at least one of the following: an identifier of each of the at least one autonomous function, a type of each of the at least one autonomous function, and version information of each of the at least one autonomous function.

In a possible implementation, the type of the autonomous function includes one or more of the following: a management data analytic management function; an energy saving management function; a coverage and capacity optimization management function; an automatic neighbor relations management function; a mobility load balancing management function; a mobility robustness optimization management function; a physical cell identifier allocation and optimization management function; a random access channel optimization management function; a traffic steering management function; or a closed-loop automatic management function.

In a possible implementation, the communication module 310 is further configured to send a second request to the first device, where the second request is used for requesting to obtain intent information of at least one intent served by a third autonomous function, and the third autonomous function is any one of a plurality of autonomous functions that the second device requests the first device to deploy; and receive the intent information from the first device, where the intent information includes an intent identifier of a second intent currently served by the third autonomous function, and/or an intent identifier of a third intent historically served by the third autonomous function; and the processing module 320 is further configured to manage the autonomous function corresponding to the second device in the following manner: manage the third autonomous function based on the intent information.

In a possible implementation, the intent information further includes: an intent type and/or an intent state of the second intent, and/or service duration and/or an intent type of the third intent.

For more detailed descriptions of the communication module 310 and the processing module 320, refer to related descriptions in the method embodiment shown in FIG. 2.

A communication apparatus 400 shown in FIG. 4 includes a processor 410 and an interface circuit 420. The processor 410 and the interface circuit 420 are coupled to each other. Optionally, the interface circuit 420 may be a transceiver or an input/output interface. Optionally, the communication apparatus 400 may further include a memory 430, configured to: store instructions to be executed by the processor 410, store input data needed by the processor 410 to run the instructions, or store data generated after the processor 410 runs the instructions.

When the communication apparatus 400 is configured to implement the method shown in FIG. 2, the processor 410 is configured to implement a function of the foregoing processing module 320, and the interface circuit 420 is configured to implement a function of the foregoing communication module 310.

When the communication apparatus is a chip used in a first device, the chip in the first device may implement a function of the first device in the foregoing method embodiment. The chip in the first device receives information from another module (for example, a radio frequency module or an antenna) in the first device, where the information is, for example, sent by a second device to the first device; or the chip in the first device may further send information to another module (for example, a radio frequency module or an antenna) in the first device, where the information is, for example, sent by the first device to a second device.

When the communication apparatus is a module used in a second device, the module in the second device implements a function of the second device in the foregoing method embodiment. The module in the second device receives information from another module (for example, a radio frequency module or an antenna) in the second device, where the information is, for example, sent by a first device to the second device; or the module in the second device sends information to another module (for example, a radio frequency module or an antenna) in the second device, where the information is, for example, sent by the second device to a first device. The module in the second device herein may be a baseband chip in the second device, or may be a CU, a DU, or another module, or may be an apparatus in an open radio access network (open radio access network, O-RAN) architecture, for example, an open CU, an open DU, or another apparatus.

Optionally, in embodiments of this application, the processor 410 may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the first device or the second device. The processor and the storage medium may alternatively exist in the first device or the second device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedure or functions according to embodiments of this application are all or partially generated. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

Based on the foregoing embodiments, an embodiment of this application further provides a computer program product. The computer program product includes a computer program. When the computer program is run on a computer, the computer is caused to perform the method provided in the foregoing embodiments.

Based on the foregoing embodiments, an embodiment of this application further provides a computer-readable storage medium. The computer-readable storage medium stores a computer program. When the computer program is executed by a computer, the computer is caused to perform the method provided in the foregoing embodiments.

Optionally, the computer may include but is not limited to the first device, the second device, or the like in the system shown in FIG. 1a.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by a computer.

Based on the foregoing embodiments, an embodiment of this application further provides a chip. The chip is configured to read a computer program stored in a memory, to implement the method provided in the foregoing embodiments. Optionally, the chip may include a processor and a memory. The processor is coupled to the memory, and configured to read the computer program stored in the memory, to implement the method provided in the foregoing embodiments.

A person skilled in the art should understand that, embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An autonomous function management method, applied to a first device, wherein the method comprises:
receiving a first request from a second device, wherein the first request is used for requesting to manage a first intent, the first request carries first indication information, and the first indication information indicates to report information about an autonomous function for serving the first intent;
obtaining information about at least one autonomous function for serving the first intent; and
sending the information about the at least one autonomous function to the second device.

2. The method according to claim 1, wherein the method further comprises:
sending second indication information to the second device, wherein the second indication information indicates whether the first intent served by the at least one autonomous function is fulfilled.

3. The method according to claim 2, wherein the method further comprises:
if the first intent is not fulfilled, generating autonomous function suggestion information, wherein the autonomous function suggestion information indicates the second device to upgrade a first autonomous function in the at least one autonomous function and/or add a second autonomous function to the at least one autonomous function; and
sending the autonomous function suggestion information to the second device.

4. The method according to claim 3, wherein when the autonomous function suggestion information indicates the second device to upgrade the first autonomous function in the at least one autonomous function, the autonomous function suggestion information further comprises an identifier and to-be-upgraded version information of the first autonomous function; or
when the autonomous function suggestion information indicates the second device to add the second autonomous function to the at least one autonomous function, the autonomous function suggestion information further comprises a type and version information of the second autonomous function.

5. The method according to any one of claims 1 to 4, wherein the method further comprises:
sending parameter adjustment information to the second device, wherein the parameter adjustment information indicates a network parameter type adjusted by the first device when the first autonomous function serves the first intent, and the network parameter type comprises one or more of the following:
a radio frequency parameter, indicating a signal transmit angle and power;
a handover parameter, indicating a handover threshold for cell reselection or cell handover;
an energy saving parameter, indicating an energy saving state of a base station or a cell;
a radio resource management parameter, indicating radio resource scheduling or management; or
a quality of service parameter, indicating service quality.

6. The method according to any one of claims 1 to 5, wherein the information about the at least one autonomous function comprises at least one of the following:
an identifier of each of the at least one autonomous function, a type of each of the at least one autonomous function, and version information of each of the at least one autonomous function.

7. The method according to claim 6, wherein the type of the autonomous function comprises one or more of the following:
a management data analytic management function;
an energy saving management function;
a coverage and capacity optimization management function;
an automatic neighbor relations management function;
a mobility load balancing management function;
a mobility robustness optimization management function;
a physical cell identifier allocation and optimization management function;
a random access channel optimization management function;
a traffic steering management function; or
a closed-loop automatic management function.

8. The method according to any one of claims 1 to 7, wherein the method further comprises:
receiving a second request from the second device, wherein the second request is used for requesting to obtain intent information of at least one intent served by a third autonomous function, and the third autonomous function is any one of a plurality of autonomous functions that the second device requests the first device to deploy;
obtaining the intent information of the at least one intent served by the third autonomous function, wherein the intent information comprises an intent identifier of a second intent currently served by the third autonomous function, and/or an intent identifier of a third intent historically served by the third autonomous function; and
sending the intent information to the second device.

9. The method according to claim 8, wherein the intent information further comprises: an intent type and/or an intent state of the second intent, and/or service duration and/or an intent type of the third intent.

10. An autonomous function management method, applied to a second device, wherein the method comprises:
sending a first request to a first device, wherein the first request is used for requesting to manage a first intent, the first request carries first indication information, and the first indication information indicates to report information about an autonomous function for serving the first intent;
receiving information about at least one autonomous function from the first device, wherein the at least one autonomous function is an autonomous function for serving the first intent; and
managing, based on the information about the at least one autonomous function, an autonomous function corresponding to the second device, wherein the autonomous function corresponding to the second device is an autonomous function that the second device requests the first device to deploy.

11. The method according to claim 10, wherein managing, based on the information about the at least one autonomous function, the autonomous function corresponding to the second device comprises:
determining, based on the information about the at least one autonomous function, an unused autonomous function from the autonomous function corresponding to the second device; and
sending third indication information to the first device, wherein the third indication information indicates the first device to disable the unused autonomous function.

12. The method according to claim 10 or 11, wherein the method further comprises:
receiving second indication information from the first device, wherein the second indication information indicates whether the first intent served by the at least one autonomous function is fulfilled; and
managing, based on the information about the at least one autonomous function, the autonomous function corresponding to the second device comprises:
managing, based on the second indication information and the information about the at least one autonomous function, the autonomous function corresponding to the second device.

13. The method according to any one of claims 10 to 12, wherein the method further comprises:
receiving autonomous function suggestion information from the first device, wherein the autonomous function suggestion information indicates to upgrade a first autonomous function in the at least one autonomous function and/or add a second autonomous function to the at least one autonomous function; and
managing, based on the information about the at least one autonomous function, the autonomous function corresponding to the second device comprises:
managing, based on the autonomous function suggestion information and the information about the at least one autonomous function, the autonomous function corresponding to the second device.

14. The method according to claim 13, wherein when the autonomous function suggestion information indicates to upgrade the first autonomous function in the at least one autonomous function, the autonomous function suggestion information comprises an identifier and to-be-upgraded version information of the first autonomous function; or
when the autonomous function suggestion information indicates to add the second autonomous function to the at least one autonomous function, the autonomous function suggestion information comprises a type and version information of the second autonomous function.

15. The method according to any one of claims 10 to 14, wherein the method further comprises:
receiving parameter adjustment information from the first device, wherein the parameter adjustment information indicates a network parameter type adjusted by the first device when the first autonomous function serves the first intent, and the network parameter type comprises one or more of the following:
a radio frequency parameter, indicating a signal transmit angle and power;
a handover parameter, indicating a handover threshold for cell reselection or cell handover;
an energy saving parameter, indicating an energy saving state of a base station or a cell;
a radio resource management parameter, indicating radio resource scheduling or management; or
a quality of service parameter, indicating service quality.

16. The method according to any one of claims 10 to 15, wherein the information about the autonomous function comprises at least one of the following:
an identifier of each of the at least one autonomous function, a type of each of the at least one autonomous function, and version information of each of the at least one autonomous function.

17. The method according to claim 16, wherein the type of the autonomous function comprises one or more of the following:
a management data analytic management function;
an energy saving management function;
a coverage and capacity optimization management function;
an automatic neighbor relations management function;
a mobility load balancing management function;
a mobility robustness optimization management function;
a physical cell identifier allocation and optimization management function;
a random access channel optimization management function;
a traffic steering management function; or
a closed-loop automatic management function.

18. The method according to any one of claims 10 to 17, wherein the method further comprises:
sending a second request to the first device, wherein the second request is used for requesting to obtain intent information of at least one intent served by a third autonomous function, and the third autonomous function is any one of a plurality of autonomous functions that the second device requests the first device to deploy; and receiving the intent information from the first device, wherein the intent information comprises an intent identifier of a second intent currently served by the third autonomous function, and/or an intent identifier of a third intent historically served by the third autonomous function; and
managing, based on the information about the at least one autonomous function, the autonomous function corresponding to the second device comprises:
managing the third autonomous function based on the intent information.

19. The method according to claim 18, wherein the intent information further comprises:
an intent type and/or an intent state of the second intent; and/or
service duration and/or an intent type of the third intent.

20. A communication system, wherein the communication system comprises a first device and a second device, the first device is configured to perform the method according to any one of claims 1 to 9, and the second device is configured to perform the method according to any one of claims 10 to 19.

21. A communication apparatus, comprising one or more processors, wherein the one or more memories store one or more computer programs, the one or more computer programs comprise instructions, and when the instructions are executed by the one or more processors, the communication apparatus is caused to perform the method according to any one of claims 1 to 9, or the method according to any one of claims 10 to 19.

22. A computer-readable storage medium, comprising a computer program, wherein when the computer program is run on an electronic device, the electronic device is caused to perform the method according to any one of claims 1 to 9, or the method according to any one of claims 10 to 19.

23. A computer program product, wherein when the computer program product is run on an electronic device, the electronic device is caused to perform the method according to any one of claims 1 to 9, or the method according to any one of claims 10 to 19.

24. A chip system, comprising a processor, configured to invoke a computer program from a memory and run the computer program, to perform the method according to any one of claims 1 to 9 or the method according to any one of claims 10 to 19.
